# EUROPEAN PATENT APPLICATION

(11) **EP 4 814 076 A1**
(43) Date of publication of application: **30.09.2026**
(21) Application number: 25192093.0
(22) Date of filing: 28.07.2025
(51) Int. Cl.: C09K 5/10, C09K 5/20, C09K 21/00

(54) **FIRE SUPPRESSION COMPOSITIONS FOR BATTERY**

(30) Priority: 25.03.2025 KR 20250037912
(71) Applicant: Ulsan National Institute of Science and Technology (UNIST), Eonyang-eup Ulju-gun Ulsan 44919 (KR); PoseidonBattery Co., Ltd., Ulsan 44919 (KR)
(72) Inventor: SON, Hee Won, Ulsan (KR); KIM, Young Sik, Ulsan (KR); BAE, Junho, Ulsan (KR); JOO, Eun Seo, Ulsan (KR)
(74) Representative: Botti & Ferrari S.p.A.

(57) **Abstract**

The present invention relates to a fire suppression composition for a battery and, specifically, to a fire suppression composition that can completely block fire in the event of a battery fire, thereby achieving low cost and environmental friendliness.

## Description

### Technical Field

The present invention relates to a fire suppression composition for a battery and, specifically, to a fire suppression composition that can completely block fire in the event of a battery fire, thereby achieving low cost and environmental friendliness.

In addition, the present invention relates to the Ulsan National Institute of Science and Technology's internal project (Project No.: 2.241124.01), "Synthesis of battery fireproof material FPM using freezing point depression and its performance verification."

### Background Art

Lithium-ion batteries (Li-ion batteries) use flammable organic substances as electrolytes to pose a fire hazard, and provide an ignition point by a short circuit of the electrodes and provide oxygen by the decomposition of the anode such that a fire accompanied by thermal runaway may occur. In particular, as the ESS market and the electric vehicle (EV) market increase, a large number of batteries are used in the form of modules and packs such that the high energy density and close packing of a large number of battery cells may lead to large-scale fires, and the scale of fire damage may increase accordingly. Accordingly, a battery fire suppression composition is required.

Meanwhile, existing battery fire suppression compositions are based on solid materials and have problems in that they may generate harmful gases such as hydrogen fluoride (HF), and need to use expensive chemicals. In addition, in the case of solid aerosol fire suppression films, potassium (K) of the solid aerosol attached to the film combines with oxygen during combustion to suffocate and extinguish the fire, but it generates harmful byproducts (such as NH₃), and has a risk of re-ignition due to insufficient cooling function.

Accordingly, there is a need to develop a fire suppression composition that can completely block fire in the event of a battery fire, thereby achieving low cost and environmental friendliness.

### Prior Art Citation

Korean Laid-open Patent Publication No. 10-2018-0128790

### Summary of Invention

### Technical Problem

An object of the present invention is to provide a fire suppression composition for a battery having improved wettability, processability, low freezing point, and improved insulation.

### Solution to Problem

To achieve the above-identified object, a fire suppression composition for a battery according to one embodiment of the present invention comprises a high specific heat liquid; an oxygen barrier polymer; an organic liquid; and an oxygen barrier inorganic material.

The high specific heat liquid may be distilled water (DI water), ammonia, or silicone oil.

The oxygen barrier polymer may be one or two or more selected from the group consisting of polyvinyl alcohol, polyethylene glycol, polyacrylic acid, polyacrylic acid derivatives, polysaccharides, polyacrylamide, polyvinylpyrrolidone, polyethyleneimine, polydiallyldimethyl ammonium chloride, xanthan gum, guar gum, gelatin, pectin, cellulose derivatives, starch derivatives, alginate, and chitosan.

The organic liquid may be ethylene glycol and/or propylene glycol.

The oxygen barrier inorganic material may be fumed silica and/or vermiculite.

The amount of the high specific heat liquid may be 30 to 60 wt%, the amount of the oxygen barrier polymer may be 1 to 5 wt%, the amount of the organic liquid may be 35 to 65 wt%, and the amount of the oxygen barrier inorganic material may be 1 to 5 wt%, based on 100 wt% of the battery fire suppression composition.

More specifically, the mount of the high specific heat liquid may be 39.25 to 52 wt%, the amount of the oxygen barrier polymer may be 3.75 to 5 wt%, the amount of the organic liquid may be 42 to 55.65 wt%, and the amount of the oxygen barrier inorganic material may be 1 to 1.35 wt%.

### Advantageous Effects of Invention

The present invention has effects of providing a high-viscosity fire suppression composition based on a high-viscosity liquid and simultaneously producing a close-fitting oxygen barrier film on the surface of a combustible material at high temperatures.

In addition, the present invention can lower the temperature of the battery surface and prevent temperature transfer to surrounding battery cells or battery modules in the event of a battery fire.

In addition, the present invention can be effectively used even at low temperatures because it has a low freezing point and a low volume expansion rate.

In addition, the present invention has low corrosiveness because it does not contain salts, and has high insulation, environmental friendliness, and low toxicity.

### Brief Description of Drawings

FIG. 1 illustrates a process of preparing a fire suppression composition for a battery according to one embodiment of the present invention.
FIG. 2 illustrates the results for a viscosity analysis of a fire suppression composition for a battery according to one embodiment of the present invention.
FIG. 3 illustrates the results of a thermogravimetric analysis for a fire suppression composition for a battery according to one embodiment of the present invention.
FIG. 4 illustrates a photographic image of a flowability analysis for a fire suppression composition for a battery according to one embodiment of the present invention.
FIG. 5 illustrates the results of a decomposition temperature analysis for a fire suppression composition for a battery according to one embodiment of the present invention.
FIG. 6 illustrates the results of a specific heat analysis for a fire suppression composition for a battery according to one embodiment of the present invention.
FIG. 7 illustrates the results of a low-capacity battery single-cell thermal runaway test for a fire suppression composition for a battery according to one embodiment of the present invention.
FIG. 8 illustrates cell-specific photographic images for a thermal runaway test for a large-capacity battery module of an electric kickboard according to one embodiment of the present invention.
FIG. 9 illustrates the results of a thermal runaway transfer test of a large-capacity battery module of an electric kickboard for a fire suppression composition for a battery according to one embodiment of the present invention.

### Mode for Invention

Hereinafter, embodiments of the present invention will be described in detail so that those skilled in the art can easily implement the present invention. However, the present invention may be implemented in various forms and is not limited to the embodiments described herein.

A fire suppression composition for a battery according to one embodiment of the present invention relates to a fire suppression composition based on a liquid, wherein the fire suppression composition for a battery comprises a cooling solution; and a suspension that lowers the freezing point. More specifically, the fire suppression composition for a battery comprises a high specific heat liquid; an oxygen barrier polymer; an organic liquid; and an oxygen barrier inorganic material.

At this time, the amount of the high specific heat liquid may be 30 to 60 wt%, the amount of the oxygen barrier polymer may be 1 to 5 wt%, the amount of the organic liquid may be 35 to 65 wt%, and the amount of the oxygen barrier inorganic material may be 1 to 5 wt%, based on 100 wt% of the battery fire suppression composition.

In addition, more specifically, the amount of the high specific heat liquid may be 39.25 to 52 wt%, the amount of the oxygen barrier polymer may be 3.75 to 5 wt%, the amount of the organic liquid may be 42 to 55.65 wt%, and the amount of the oxygen barrier inorganic material may be 1 to 1.35 wt%.

The high-density liquid and the oxygen barrier polymer constitute the cooling solution, and the cooling solution has a cooling effect in the event of a battery fire and simultaneously forms an oxygen-blocking film.

The high specific heat liquid has high thermal conductivity and high specific heat at the same time, and can lower the temperature in the event of a fire. The high specific heat liquid may be distilled water (DI water), ammonia, or silicone oil.

The amount of the high specific heat liquid may be 30 to 60 wt%, preferably 39.25 to 52 wt%, based on 100 wt% of the fire suppression composition for the battery.

The oxygen barrier polymer can prevent the high-density heat liquid in the cooling solution from boiling in the event of a fire and simultaneously form a non-combustible film on the surface of a combustible material (e.g., a battery) to block the combustible material and air.

The amount of the oxygen barrier polymer may be 0.1 to 5 wt%, preferably 3.75 to 5 wt%, based on 100 wt% of the fire suppression composition for the battery.

The oxygen barrier polymer may be one or two or more selected from the group consisting of polyvinyl alcohol, polyethylene glycol, polyacrylic acid, polyacrylic acid derivatives, polysaccharides, polyacrylamide, polyvinylpyrrolidone, polyethyleneimine, polydiallyldimethyl ammonium chloride, xanthan gum, guar gum, gelatin, pectin, cellulose derivatives, starch derivatives, alginate, and chitosan.

The cellulose derivative may be one or two or more selected from the group consisting of carboxymethyl cellulose, hydroxyethyl cellulose, and methyl cellulose.

The organic liquid and the oxygen barrier inorganic material constitute the suspension, and the suspension suppresses fire by raising the combustion point of a combustible material (e.g., battery) in the event of a fire, and lowers the freezing point and reduces the volume expansion rate, thereby enabling the effective use of the fire suppression composition even at low temperatures.

The organic liquid lowers the freezing point and lowers the volume expansion rate, and the organic liquid may be ethylene glycol and/or propylene glycol.

The amount of the organic liquid may be 35 to 65 wt%, more preferably 42 to 55.65 wt%, based on 100 wt% of the fire suppression composition for the battery.

The oxygen barrier inorganic material may not burn in a fire by increasing the decomposition temperature of the fire suppression composition for the battery and form a non-combustible film on the surface of a combustible material (e.g., a battery) to block the combustible material and air. The oxygen barrier inorganic material may be fumed silica and/or vermiculite.

The amount of the oxygen barrier inorganic material may be 0.1 to 5 wt%, more preferably 1 to 1.35 wt%, based on 100 wt% of the fire suppression composition for the battery.

Hereinafter, the present invention will be described in more detail through examples. Each of the examples is only one example for understanding the present invention and does not limit the scope of the present invention.

### Example 1. Method for Preparing Fire Suppression Composition for Battery

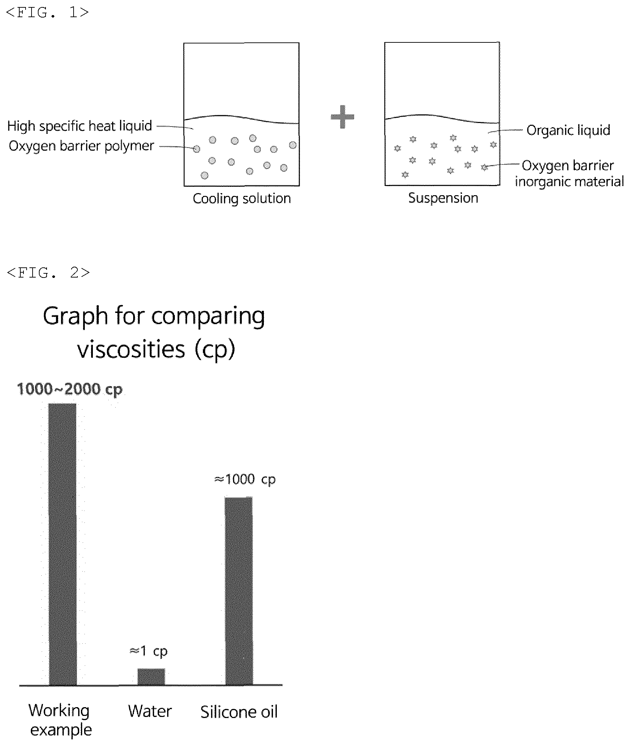

Referring to FIG. 1, a method for preparing a fire suppression composition for a battery according to one embodiment of the present invention is described.

10 g of polyvinyl alcohol (PVA) was dissolved in 104 g of distilled water as a high specific heat liquid to prepare 114 g of PVA aqueous solution as a cooling solution, which was then cooled at room temperature until the color of the solution became transparent.

2 g of fumed silica was added to 84 g of ethylene glycol to prepare 86 g of suspension.

86 g of the suspension was mixed with 114 g of the prepared PVA aqueous solution (cooling solution) (cooling solution:suspension ≈ 6:4 (w:w)) to prepare a fire suppression composition for a battery.

### Example 2. Method for preparing fire suppression composition for battery

Referring to FIG. 1, a method for preparing a fire suppression composition for a battery according to one embodiment of the present invention is described.

As a high specific heat liquid, 7.5 g of PVA (polyvinyl alcohol) was dissolved in 78.5 g of distilled water to prepare 86 g of PVA aqueous solution as a cooling solution, which was then cooled at room temperature until the color of the solution becomes transparent.

2.7 g of fumed silica was added to 111.3 g of ethylene glycol to prepare 114 g of suspension.

86 g of the prepared PVA aqueous solution (cooling solution) was mixed with 114 g of the suspension (cooling solution:suspension ≈ 4:6 (w:w)) to prepare a fire suppression composition for a battery.

The compositional ratio (wt%) of the materials contained in the fire suppression compositions for a battery prepared in Examples 1 and 2 is as shown in Table 1 below.

**[Table 1]**

| | **Diluted water** | **PVA** | **Ethylene glycol** | **Fumed silica** |
|---|---|---|---|---|
| **Example 1** | 52 wt% | 5 wt% | 42 wt% | 1 wt% |
| **Example 2** | 39.25 wt% | 3.75 wt% | 55.65 wt% | 1.35 wt% |

### Experimental example 1. High Viscosity Analysis for Fire Suppression Composition

The viscosity of the fire suppression composition prepared in Example 1 was measured using a BROOKFIELD AMETEK DV-1 Viscometer, and the viscosities of water and silicone oil as controls were measured together, and the results are shown in FIG. 2. Referring to FIG. 2, the viscosity of the fire suppression composition of the working example was confirmed to be 1000 to 2000 cp, which shows that it has a relatively high viscosity, as compared to the controls (i.e., water and silicone oil).

### Experimental Example 2. Low Freezing Point of Fire Suppression Composition

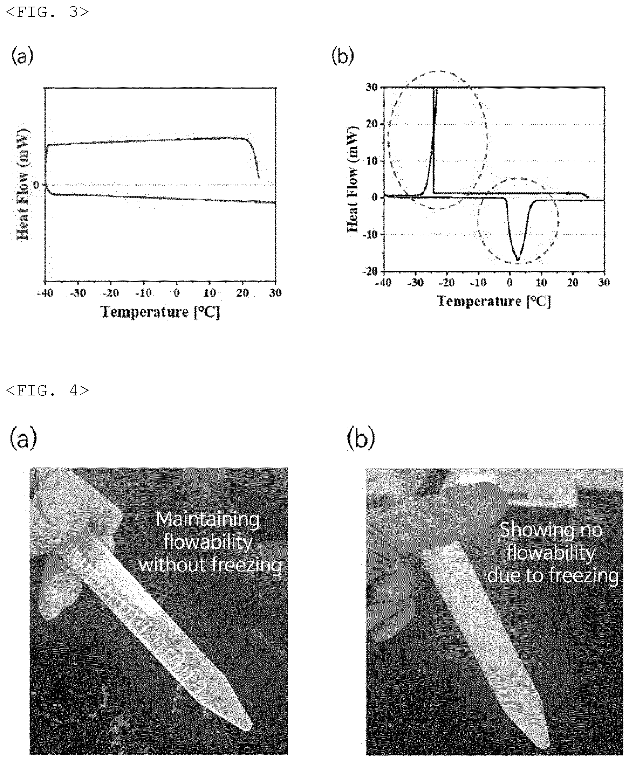

The heat flow of the fire suppression composition prepared in Example 1 was analyzed according to temperature using TA Instrument-Q200 DSC equipment, and the results are shown in FIG. 3(A). The same measurements were also made for water as a control group, and the results are shown in FIG. 3(B).

Referring to FIG. 3, the presence or absence of phase change, the freezing point and melting point may be identified through the identification of the material aspect, and, as in FIG. 3(B), the control group undergoes a phase change such that a sharp peak occurs (red dotted line circle), whereas it is confirmed that Example 1 in FIG. 3(A) had no phase change up to -40°C and there was a flat section.

In addition, the fire suppression composition prepared in Example 1 and the control group were stored in a freezer set to -20°C for more than 4 hours, and then their photographic images confirmed with the naked eye are shown in FIG. 4.

Referring to FIG. 4(A), it is confirmed that the fire suppression composition prepared in Example 1 did not freeze and had flowability even after being stored in a freezer set to -20°C for more than 4 hours. Meanwhile, referring to FIG. 4(B), it is confirmed that the control group crystallized while freezing and became opaque and did not show flowability.

### Experimental Example 3. High Decomposition Temperature of Fire Suppression Composition

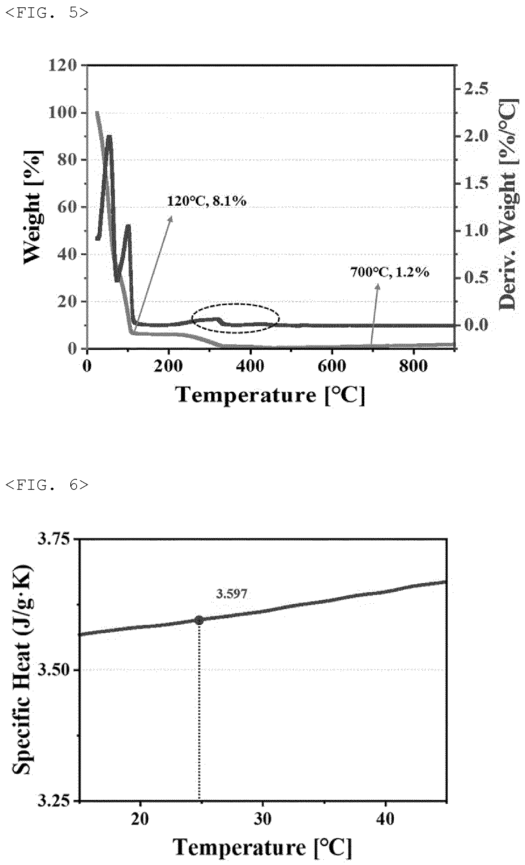

The results of thermogravimetric analysis measured using TA Instrument-Q500 TGA equipment for the fire suppression composition prepared in Example 1 are shown in FIG. 5. Referring to FIG. 5, its mass remained at 1.2% even at temperatures above 700°C, and it is confirmed that the fire suppression composition could withstand high temperatures (above 700°C) without burning or completely decomposing.

### Experimental Example 4. Electrical Conductivity Analysis for Fire Suppression Composition

The electrical conductivity of the fire suppression composition prepared in Example 1 was measured using an Orionstar Conductivity meter from Thermo Fischer, and the measurement result was 77.43 µS/cm. Meanwhile, considering that the electrical conductivity of commercialized eco-friendly vehicle concentrated coolant is 1050 to 1150 µS/cm, the electrical conductivity of the fire suppression composition of Example 1 is considered a low value.

### Experimental Example 5. Acidity measurement

The pH of the fire suppression composition prepared in Example 1 was measured using an Orion Vera Star Pro pH meter from Thermo Fischer, and it was measured to be approximately 5.547, indicating very weak acidity. Therefore, the fire suppression composition of Example 1 is expected to have low corrosiveness.

### Experimental Example 6. Specific Heat Analysis for Fire Suppression Composition

The specific heat of the fire suppression composition prepared in Example 1 was measured using Differential Scanning Calorimetry (DSC) of NETZSCH, Thermal Analysis Laboratory, Ajou University, and the results are shown in FIG. 6. Referring to FIG. 6, it is confirmed that the fire suppression composition had a high specific heat at room temperature (25°C) with the measurement result of 3.597 J/g·K. The specific heat of water, which has the highest specific heat among liquids, is 4.144 J/g·K, which is not much different from that of the developed fire suppression composition and is still a very high value, as compared to other substances.

### Experimental Example 7. Thermal conductivity analysis of fire suppression composition

The thermal conductivity of the fire suppression compositions prepared in Examples 1 and 2 was measured several times using a thermal conductivity meter (LFA457) from the Thermal Analysis Laboratory of Ajou University NETZSCH. The results are summarized in Table 2 (Example 1) and Table 3 (Example 2). Referring to Tables 2 and 3, the average thermal conductivity of the fire suppression composition in the examples was confirmed to be 452 mW/m K. This is evaluated to be higher than that of existing materials as shown in Table 4 below, and therefore it is predicted that the fire suppression composition will effectively dissipate the generated heat.

**[Table 2]**

| **Measure -ment cycle** | **Temperature (°C )** | **Conduct-ivity (W /m·K)** | **Diffusi-tivy(mm² /s)** | **Cp(J/g· K)** | **Laser voltage (V)** | **Puse widthe( ms)** |
|---|---|---|---|---|---|---|
| 1 | 25 | 0.450 | 0.112 | 3.597 | 230 | 0.30 |
| 2 | 25 | 0.452 | 0.113 | 3.597 | 230 | 0.30 |
| 3 | 25 | 0.453 | 0.113 | 3.597 | 230 | 0.30 |
| 4 | 25 | 0.450 | 0.113 | 3.597 | 230 | 0.30 |
| 5 | 25 | 0.450 | 0.113 | 3.597 | 230 | 0.30 |
| 6 | 25 | 0.453 | 0.113 | 3.597 | 230 | 0.30 |
| 7 | 25 | 0.453 | 0.113 | 3.597 | 230 | 0.30 |
| 8 | 25 | 0.453 | 0.113 | 3.597 | 230 | 0.30 |
| Mean | 25 | 0.452 | 0.113 | 3.597 | | |

**[Table 3]**

| **Measure -ment cycle** | **Temperature (°C )** | **Conduct-ivity (W /m·K)** | **Diffusitivy(m m²/s)** | **Cp(J/g· K)** | **Laser voltage (V)** | **Puse widthe( ms)** |
|---|---|---|---|---|---|---|
| 1 | 25 | 0.392 | 0.113 | 3.217 | 230 | 0.30 |
| 2 | 25 | 0.392 | 0.112 | 3.217 | 230 | 0.30 |
| 3 | 25 | 0.389 | 0.112 | 3.217 | 230 | 0.30 |
| 4 | 25 | 0.393 | 0.113 | 3.217 | 230 | 0.30 |
| 5 | 25 | 0.389 | 0.112 | 3.217 | 230 | 0.30 |
| 6 | 25 | 0.390 | 0.112 | 3.217 | 230 | 0.30 |
| 7 | 25 | 0.392 | 0.113 | 3.217 | 230 | 0.30 |
| 8 | 25 | 0.389 | 0.112 | 3.217 | 230 | 0.30 |
| Mean | 25 | 0.391 | 0.112 | 3.217 | | |

**[Table 4]**

| **Substance** | **Thermal conductivity (W·m⁻¹·K⁻¹)** |
|---|---|
| Air | 0.026 |
| Styrofoam | 0.033 |
| Water | 0.6089 |
| Caster Oil | 0.180 |
| Ethanol | 0.171 |

### Experimental Example 8. Thermal Runaway Test Of Low-Capacity Battery Single-Cell

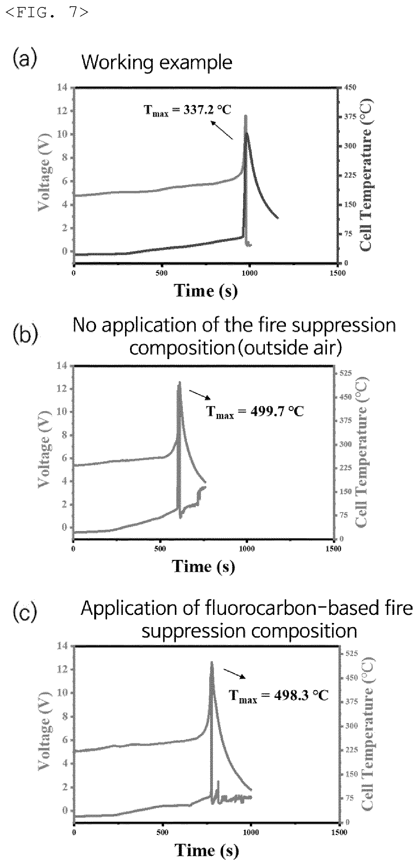

An experiment was conducted to forcibly cause thermal runaway by overcharging on a 100 mAh low-capacity pouch battery, and the result of applying the fire suppression composition of Example 1 when thermal runaway occurred is shown in FIG. 7(A), the result of not applying the fire suppression composition (outside air) is shown in Fig. 7(B), and the result of applying a fluorocarbon-based fire suppression composition is shown in FIG. 7(C). Referring to FIG. 7, when battery thermal runaway occurred, the maximum temperature was 499.7 °C in the case of not applying the fire suppression composition of Example 1 (outside air) in FIG. 7(B). When a fluorocarbon-based fire suppression composition was applied in FIG. 7(C), the temperature rose to 498.3 °C. On the other hand, when the fire suppression composition of Example 1 was applied as in FIG. 7(A), it is confirmed that the temperature decreased by up to 160 °C, as compared to the comparative material (FIGS. 7(B) and (C)).

### Experimental Example 9. Thermal Runaway Transition Test of Electric Scooter Large-Capacity Battery

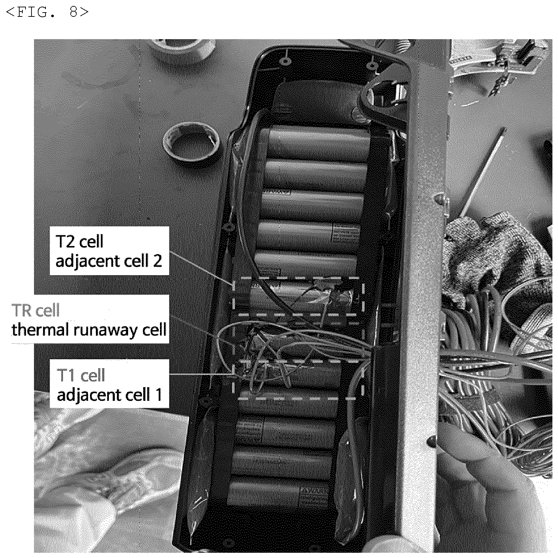

As shown in FIG. 8, a thermal runaway test was performed on a 13S 4P battery module used in an electric kickboard, and FIG. 8 indicates a thermal runaway cell ("TR cell"), adjacent cell 1 ("T1 cell") and adjacent cell 2 ("T2 cell") adjacent to the thermal runaway cell.

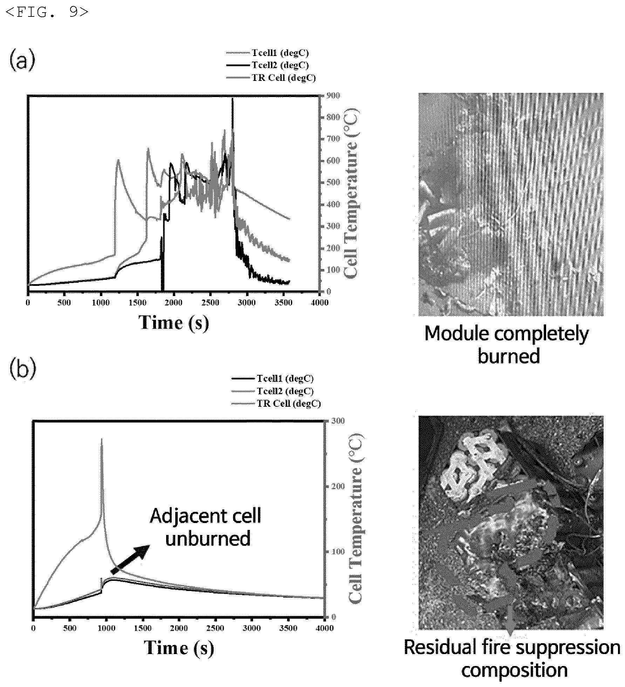

As shown in FIG. 8, the test results of the thermal runaway cell ("TR cell"), adjacent cell 1 ("T1 cell"), and adjacent cell 2 ("T2 cell") according to the case of thermal runaway, and the photographic image of the thermal runaway cell ("TR cell") are shown in FIG. 9(A).

In addition, when the fire suppression composition prepared in Example 1 was applied, the test results of the thermal runaway cell ("TR cell"), adjacent cell 1 ("T1 cell"), and adjacent cell 2 ("T2 cell") according to the case of thermal runaway, and a photographic image of the thermal runaway cell ("TR cell") are shown in FIG. 9(B). In FIG. 9(B), the fire suppression composition prepared in Example 1 was positioned to surround the surface portion of the thermal runaway cell ("TR cell").

Referring to FIG. 9(A), it is confirmed that the battery module was completely burned (the right image of FIG. 9(A)).

Meanwhile, referring to FIG. 9(B), when the fire suppression composition of Example 1 was applied, the fire caused by thermal runaway of the electric kickboard battery module was immediately extinguished, and not only was the degree of damage to the battery significantly reduced, but the adjacent cells ("T1 cell", "T2 cell") were not combusted, as confirmed through the test result graph (the left image of FIG. 9(B)), and the remaining suppression composition (the fire suppression composition of Example 1) was confirmed through the right image of FIG. 9(B).

Although the preferred embodiments of the present invention have been described in detail above, the scope of the present invention is not limited thereto, and various modifications and improvements made by those skilled in the art using the basic concept of the present invention defined in the following claims also fall within the scope of the present invention.

## Claims

1. A fire suppression composition for battery, comprising a high specific heat liquid; an oxygen barrier polymer; an organic liquid; and an oxygen barrier inorganic material.

2. The fire suppression composition for battery according to claim 1, wherein the high specific heat liquid contains distilled water (DI water), ammonia, or silicone oil.

3. The fire suppression composition for battery according to claim 1, wherein the oxygen barrier polymer contains one or two or more selected from the group consisting of polyvinyl alcohol, polyethylene glycol, polyacrylic acid, polyacrylic acid derivatives, polysaccharides, polyacrylamide, polyvinylpyrrolidone, polyethyleneimine, polydiallyldimethyl ammonium chloride, xanthan gum, guar gum, gelatin, pectin, cellulose derivatives, starch derivatives, alginate, and chitosan.

4. The fire suppression composition for battery according to claim 1, wherein the organic liquid is ethylene glycol and/or propylene glycol.

5. The fire suppression composition for battery according to claim 1, wherein the oxygen barrier inorganic material is fumed silica and/or vermiculite.

6. The fire suppression composition for battery according to claim 1, wherein the amount of the high specific heat liquid is 30 to 60 wt%, the amount of the oxygen barrier polymer is 1 to 5 wt%, the amount of the organic liquid is 35 to 65 wt%, and the amount of the oxygen barrier inorganic material is 1 to 5 wt%.

7. The fire suppression composition for battery according to claim 1, wherein the amount of the high specific heat liquid is 39.25 to 52 wt%, the amount of the oxygen barrier polymer is 3.75 to 5 wt%, the amount of the organic liquid is 42 to 55.65 wt%, and the amount of the oxygen barrier inorganic material is 1 to 1.35 wt%.
